(19) Europäisches Patentamt
European Patent Office
Office européen des brevets

(11) **EP 3 734 930 A1**

(12) **EUROPÄISCHE PATENTANMELDUNG**

(43) Veröffentlichungstag:
**04.11.2020   Patentblatt 2020/45**

(51) Int Cl.:
*H04L 29/06* *(2006.01)*      *G06F 21/55* *(2013.01)*
*H04L 12/26* *(2006.01)*

(21) Anmeldenummer: **19171861.8**

(22) Anmeldetag: **30.04.2019**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder:
• **Falk, Rainer
85586 Poing (DE)**

• **Fischer, Kai
85598 Baldham (DE)**
• **Fries, Steffen
85598 Baldham (DE)**
• **Furch, Andreas
85354 Freising (DE)**
• **Heintel, Markus
81377 München (DE)**
• **Papagudi Subrahmanyam, Niranjana
81829 München (DE)**
• **Sel, Tolga
81379 München (DE)**

(54) **ANGRIFFSERKENNUNG AUF COMPUTERSYSTEME**

(57)    Die Erfindung gibt ein Verfahren zur Erkennung einer Anomalie und eines Angriffs auf eine über ein vorgegebenes Kommunikationsprotokoll synchronisierte erste Kommunikationseinheit (S) eines industriellen Netzwerks mit den Schritten:
- Übertragen von mindestens einem ersten Paket (DQ) von einer zweiten Kommunikationseinheit (M) zu der ersten Kommunikationseinheit (S),
- Übertragen von mindestens einem zweiten Paket (DR) von der ersten Kommunikationseinheit (S) an die zweite Kommunikationseinheit (M) als Antwort auf das erste Paket (DQ),
- Ermittlung einer Laufzeit (D), wobei die Laufzeit (D) die Differenz des Ankunftszeitpunkts (t4) des zweiten Pakets (DR) in der zweiten Kommunikationseinheit (M) und des Absendezeitpunkts (t1) des ersten Pakets (DQ) von der zweiten Kommunikationseinheit (M) ist, und/oder wobei die Laufzeit (D) die Differenz des Absendezeitpunkts (t3) des zweiten Pakets (DR) von der ersten Kommunikationseinheit (S) und des Ankunftszeitpunkts (t2) des ersten Pakets (DQ) bei der ersten Kommunikationseinheit (S) ist, und/oder wobei die Laufzeit (D) die Differenz des Absendezeitpunkts (t3) des zweiten Pakets (DR) von der ersten Kommunikationseinheit (S) und des Absendezeitpunkts (t3b) eines weiteren zweiten Pakets (DR) bei der ersten Kommunikationseinheit (S) ist, und/ oder wobei die Laufzeit (D) die Differenz des Ankunftszeitpunkts (t4) des zweiten Pakets (DR) in der zweiten Kommunikationseinheit (M) und des Ankunftszeitpunkts (t4b) eines weiteren zweiten Pakets (DR) in der zweiten Kommunikationseinheit (M) ist,
- Ermittlung einer Abweichung der Laufzeit (D) von einem vorgegebenen Laufzeitkorridor,
- Ausgabe eines Warnsignals als Hinweis auf eine Anomalie und eines Angriffs, wenn die Laufzeit (D) außerhalb des Laufzeitkorridors liegt. Außerdem gibt die Erfindung ein industrielles Netzwerk.

## FIG 2

$$CPU\text{-}T = t3 - t2$$

$$D = [(t4-t1)-(t3-t2)]/2$$

**Beschreibung**

**HINTERGRUND DER ERFINDUNG**

**Gebiet der Erfindung**

Die vorliegende Erfindung betrifft ein Verfahren zur Erkennung einer Anomalie und eines Angriffs auf eine über ein vorgegebenes Kommunikationsprotokoll synchronisierte erste Kommunikationseinheit eines industriellen Netzwerks. Außerdem gibt die Erfindung ein industrielles Netzwerk an. Die Erfindung kann insbesondere zur Angriffserkennung auf Computersysteme verwendet werden.

**Beschreibung des Stands der Technik**

Industrielle Automatisierungs- und Steuerungssysteme (Industrial Automation and Control Systems IACS, auch als ICS oder als Cyber Physical System (CPS) oder Industrial Internet of Things (IIoT) bezeichnet) überwachen, steuern und ermöglichen die Kontrolle industrieller Prozesse wie Steuerung von Maschinen und Anlagen. Viele ICS sind vernetzt und daher offen für potenzielle Angriffe. Es existieren Schutzmaßnahmen, die auf dem ICS zum Schutz vor Angriffen realisiert werden können. Doch diese Gegenmaßnahmen können teilweise auf Altgeräten bzw. in existierenden Anlagen (brownfield) nicht nachträglich eingebracht werden, oder sie könnten von einem hochversierten Angreifer überwunden werden. Aus diesem Grund wird ein Mechanismus benötigt, um die Integrität eines ICS zu überwachen.

Ein Intrusion Detection System (IDS) ist ein System, das Computersysteme bzw. Computernetzwerke überwacht und zum Ziel hat Angriffe zu erkennen. Generell verwenden IDS zwei verschiedene Techniken zur Angriffserkennung. Die Signaturbasierte (engl.: signature-based) Angriffserkennung (ursprünglich aus dem Bereich der Antiviren-Systeme stammend) nutzt in einer Datenbank hinterlegte Angriffsmuster (z.B. spezielle Events, die auf einen möglichen Angriff hinweisen), um das System zu überwachen. Angriffe werden erkannt, indem das IDS Angriffssignaturen aus seiner Datenbank mit dem aktiven Systemverhalten vergleicht. Stimmt das aktuelle Systemverhalten mit einer hinterlegten Angriffs-Signatur überein, so schließt das IDS auf einen Angriff. Signaturen könnten unter anderem Hash-Werte von bekannten Malwaredateien, verdächtige Netzwerkkommunikation, fehlgeschlagene Aufrufe, Modifikationen am Betriebssystem und Ähnliches sein.

Die zweite Klasse umfasst Anomalie-basierte IDS. Diese Technik versucht Angriffe anhand von Veränderungen des Systemverhaltens zu erkennen. Das bedeutet konkret, dass das IDS im ersten Schritt das normale Verhalten des Computersystems lernt/analysiert, um im zweiten Schritt das aktuelle Verhalten des Systems mit dem zuvor erlernten normalen Verhalten zu vergleichen. Weicht das aktuelle Verhalten von dem zuvor erlernten normalen Verhalten ab, so kann dies als Anomalie gewertet werden und ist unter Umständen ein Zeichen für einen Angriff oder eine Kompromitierung eines Computersystems. Die Entscheidung, ob das System von dem normalen Verhalten abweicht, kann mittels statistischer Methoden oder Algorithmen des maschinellen Lernens (engl. Machine Learning), bewerkstelligt werden.

Ein Host-based Intrusion Detection Systems (HIDS) ist auf einem Computersystem installiert und sammelt Informationen über dessen Betriebszustand, um mit Hilfe dieser Informationen Angriffe zu erkennen. Ein Network-based Intrustion Detection System (NIDS) analysiert die Netzwerkkommunikation in einem Computernetzwerk, um verdächtige Aktivitäten bzw. Angriffsmuster zu entdecken.

Um alle Arten des IDS realisieren zu können (HIDS, NIDS sowie Signatur- und Anomalie-basiert), muss das aktuelle Systemverhalten zur Laufzeit detailliert geprüft werden. Systemparameter, die geprüft werden, bezeichnet man auch als "Feature". Features sind beispielsweise: aktive/installierte Programme, gespeicherte Daten, Systemaufrufe (engl.: System Calls), Datenzugriffe, Nutzerlogin, fehlgeschlagene Aufrufe, aktive Netzwerkverbindungen oder aber auch die Anzahl an Datenzugriffen auf eine bestimmte Datei, die Auslastung der Netzwerkverbindung (übertragene Daten pro Sekunde, Anzahl der aktiven Kommunikationssessions, IP Adressen mit denen kommuniziert wird, etc.), die Reihenfolge bestimmter System Calls, usw.

Hochversierte Angreifer verfügen über große Kapazitäten, um zielgerichtete Angriffe auf ICS oder andere Computersysteme durchzuführen. So ist es denkbar, dass ganze Abteilungen eingesetzt werden, um bestimmte Computersysteme gezielt anzugreifen. Beispielsweise haben Forschungen gezeigt, dass der Entwicklungsaufwand für den Stuxnet Computerwurm sehr hoch erscheint und nur von einer hochversierten Programmierer-Gruppe entwickelt worden sein könnte. Aus diesem Grund ist es schwer, Security-Gegenmaßnahmen zu betreiben (entweder auf dem Gerät, bzw. Netzwerk-basiert), die nicht von hochversierten Angreifern deaktiviert bzw. überlistet werden können. Ein Angreifer, der beispielsweise Administratorrechte über ein Computersystem verfügt, könnte ein HIDS einfach deaktivieren bzw. die Analyseergebnisse manipulieren. So würde der Betreiber falsche Analyseergebnisse sehen und glauben, dass das Computersystem integer ist, obwohl ein Angreifer bereits die vollständige Kontrolle über das System erlangt hat.

Zusammenfassend kann gesagt werden, dass Lösungen benötigt werden, um ein ICS zu überwachen und somit zu erkennen, ob potenzielle Angreifer das ICS kompromittiert haben oder nicht. Üblicherweise werden zur Systemüberwachung mehrere Lösungen gleichzeitig verwendet, wobei jede verschiedene Features auswertet, und somit die Wahrscheinlichkeit erhöht wird Angriffe zu erkennen.

Aus dem Stand der Technik sind Gegenmaßnahmen bekannt. Um Angreifern den Zugang zum Computersystem zu erschweren, werden Härtungsmaßnahmen verwendet. Beispielsweise kann hierzu der Kernel unter besonderen Schutz genommen, der Zugriff auf kritische Systemschnittstellen nur dem Administrator gewährt, oder aber gewisse kritische Funktionalitäten gänzlich gesperrt werden, um Angreifern den Raum für mögliche Angriffe auf die Computersysteme zu limitieren.

Es existieren auch Zusatzlösungen, wie beispielsweise ein HIDS/NIDS. Diese Ansätze versuchen mittels Signatur- und Anomalie-basierter Methoden, Angriffe auf einem ICS zu erkennen. Jedoch könnten HIDS versagen, falls Angreifer über Administratorrechte verfügen oder den Kernel gänzlich kontrollieren. NIDS auf der anderen Seite könnten ebenfalls ihre Effektivität verlieren, wenn Angreifer die Angriffe über eine verschlüsselte Kommunikation (z.B. SSH) tunneln oder legitime Kommunikationsprotokolle wie bspw. Telnet ausnutzen, um Angriffe darüber zu fahren.

Weiterhin existieren auch Hardwarelösungen, die in einem ICS/Computersystem betrieben werden können, um die Sicherheit zu erhöhen. Ein Beispiel hierzu ist ein Trusted Platform Module. Hierbei wird ein Measured Boot durchgeführt, wobei jede Boot-Komponente eine kryptographische Prüfsumme der nächsten Boot-Komponente erstellt. Die Prüfsummen werden zur Aktualisierung von speziellen Registern, sog. Platform Configuration Registers (PCRs), des TPMs verwendet. Die PCRs enthalten somit Informationen, um den Zustand des Gerätes (integer / nicht integer) für jede Boot-Komponente prüfen zu können. Anschließend lässt sich somit prüfen, welche Komponenten geladen wurden. Die PCR-Werte können anschließend mit einem im TPM gespeicherten privaten Schlüssel signiert werden (Attestierung). Die Signatur und Measurement-Liste werden dann an eine weitere Instanz geleitet, wo diese überprüft werden können. Diese Instanz kann somit eine Aussage über die Integrität der gestarteten Software-Komponenten des Gerätes machen und anschließend beispielsweise den Zugang zu einem Service freischalten. Dieser Mechanismus eignet sich jedoch nicht, um Angriffe zu erkennen, die nach dem Bootvorgang stattgefunden haben. Daher kann mit diesem Mechanismus kein schadhaftes Verhalten auf dem Gerät zur Laufzeit detektiert werden.

Zusammenfassend kann gesagt werden, dass mit den beschriebenen Ansätzen nicht verlässlich nachgewiesen werden kann, ob sich ein ICS in einem Computernetzwerk normal bzw. anormal verhält. Da keine Lösung garantieren kann, Angriffe im absoluten Sinn zu erkennen, müssen verschiedenste Lösungen im Verbund eingesetzt werden, um die Wahrscheinlichkeit zu erhöhen Angriffe zu erkennen. Daher werden weitere Lösungen benötigt, Angriffe auf einem ICS zu erkennen.

Im Folgenden wird eine Einführung zu dem Precision Time Protocol (PTP, IEEE 1588) gegeben. Das PTP ist ein Netzwerkprotokoll, das die Uhrzeit mehrerer Geräte in einem Computernetzwerk hochgenau synchronisiert. Hierbei kann die Zeit zwischen zwei PTP Teilnehmern über Ethernet-Netzwerke auf weniger als eine Mikrosekunde genau synchronisiert werden. Der Grandmaster (GM) und die Boundary Clock (BC) stellen in PTP den Zeitgeber dar (Master). Die Ordinary Clock (OC) ist der Zeitnehmer (Slave). Die Transparent Clock (TC) ist dazu da, Uhren in verschiedenen Netzwerksegmenten miteinander zu verbinden und fungiert nicht als Zeitquelle. PTP ermöglicht eine hohe Genauigkeit bzgl. der Zeitsynchronisation, weil die Paket-Übertragungszeit (Delay) zwischen zwei PTP-Instanzen exakt bestimmt werden kann. Außerdem kann auch die Paket-Bearbeitungszeit einer PTP Instanz, die eine TC benötigt, um das PTP-Paket von einem Netzwerksegment in das andere weiterzuleiten, genau bestimmt werden. Da diese Paket-Bearbeitungszeit die Delay Messung verfälschen kann, bietet PTP die Möglichkeit, die Bearbeitungszeit zu messen und so die Genauigkeit zu verbessern.

Die ResidenceTime (dt. Paket-Bearbeitungszeit / Paketverweilzeit) wird in einer PTP-Instanz (Transparent Clock TC) gemessen. Die Verweilzeit wird im PTP-Paket in dem Feld CorrectionField hinterlegt. Somit kann die PTP-Instanz diese Verlustzeit herausrechnen und die Zeit hochgenau synchronisieren. Für die Berechnung wird notiert, wann das Paket an einem Netzwerkeingang angekommen ist (ingressTimestamp) und wann das Paket die PTP-Instanz bzw. die Netzwerkkarte wieder verlassen hat (egressTimestamp). Über die Differenz dieser Werte kann herausgefunden werden, wie lange die PTP-Instanz benötigt hat (ResidenceTime), um das PTP-Paket zu bearbeiten. Außerdem wird dieser Wert in dem correctionField Platzhalter einer PTP-Nachricht hinterlegt und trägt somit zur hohen Präzision des PTP-Protokolls bei.

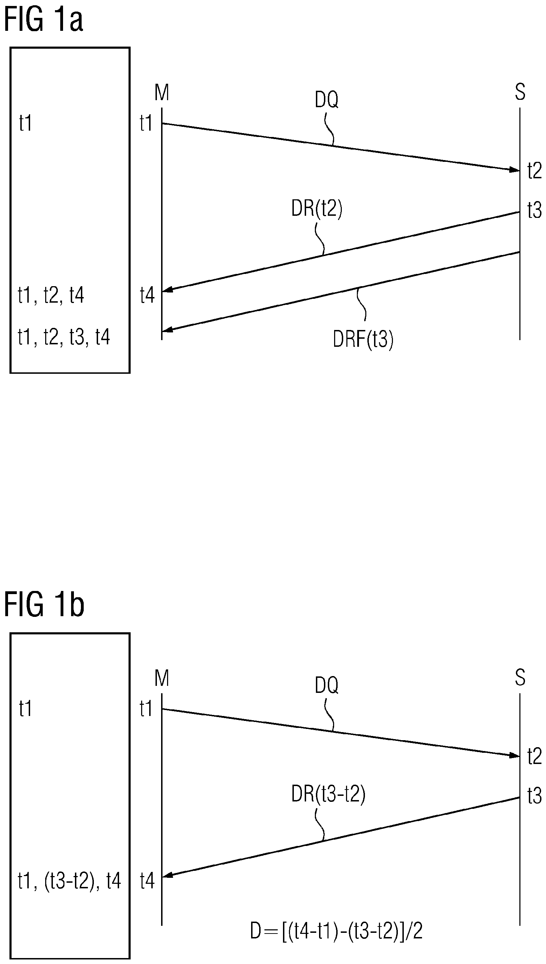

Fig. 1a und Fig. 1b illustrieren die Messung eines Delays D (auch als Paketlaufzeit oder Paket-Übertragungszeit bezeichenbar) zwischen zwei PTP-Kommunikationsteilnehmern, hier Master M und Slave S. Der Delay D wird über die symmetrische Verzögerung (Round-Trip-Time) der Delay Request DQ und Delay Response DR Nachrichten bestimmt. Entscheidend für die Messung des Delays D und deren Genauigkeit ist jedoch eine symmetrische Verzögerung zwischen Master M und Slave S, d.h. gleiche Werte für Hin- und Rückrichtung. Bei direkter Verbindung über ein Stück Kabel ist dies praktisch erfüllt. Befinden sich jedoch Netzwerkkomponenten wie Switches oder Router zwischen den Kommunikationsteilnehmern, ist dies nicht mehr in allen Fällen gegeben. Aus diesem Grund wurde für solche Geräte die Transparent Clock definiert. Diese Komponente leitet die Pakete an die jeweiligen Netzwerksegmente weiter und misst auch die Zeit, die es dazu benötigt hat (die Bearbeitungszeit oder auch als Residence Time, z.B. hinterlegt im correctionField von PTP Nachrichten, bezeichenbar). Dadurch kann trotz Jitter oder fehlender Symmetrie in der Laufzeit eine hochgenaue Zeitsynchronisation erreicht werden.

Ein erster Kommunikationsteilnehmer (hier Slave S) erhält von einem zweiten Kommunikationsteilnehmer (hier Master M) ein erstes Paket, zum Beispiel einen Delay Request DQ. Der Delay Request DQ wurde zum ersten Zeitpunkt t1 von dem Master M abgeschickt und kommt zum zweiten Zeitpunkt t2 bei dem Slave S an.

Zum dritten Zeitpunkt t3 sendet der Slave S eine Delay Response DR. Im One-Step Modus enthält die (wobei die Delay Response DR(t2) den Zeitwert des zweiten Zeitpunktes t2 transportiert) Nachricht die Differenz aus dem dritten Zeitpunkt t3 und dem zweiten Zeitpunkt t2 (die Nachricht Delay Response Follow-up DRF wird hier nicht versandt). Im Two-Step Modus (Fig. 1a), versendet die Ordinary Clock OC zunächst die Nachricht Delay Response DR und anschließend die Nachricht Delay Response Follow-up DRF. Die Delay Response DR Nachricht enthält den Wert t2 (die Delay Response DR(t2) transportiert den Zeitwert des zweiten Zeitpunktes t2). Der Zeitpunkt, bei dem die Delay Response DR Nachricht beim Master eintrifft, ist t4. Die Delay Response Follow-up DRF Nachricht enthält den Wert t3 (die Delay Response Follow-up DRF (t3) transportiert den Zeitwert des dritten Zeitpunktes t3). So hat der Master nun alle Werte t1, t2, t3 und t4 und kann den Delay D berechnen (in der Box links dargestellt). Der Delay D lässt sich durch die Hälfte der Summe der Differenz des zweiten Zeitpunkts t2 und des ersten Zeitpunkts t1 plus der Differenz des vierten Zeitpunkts t4 und des dritten Zeitpunkts t3 berechnen (Delay D).

$$D = [(t4-t1)-(t3-t2)]/2$$

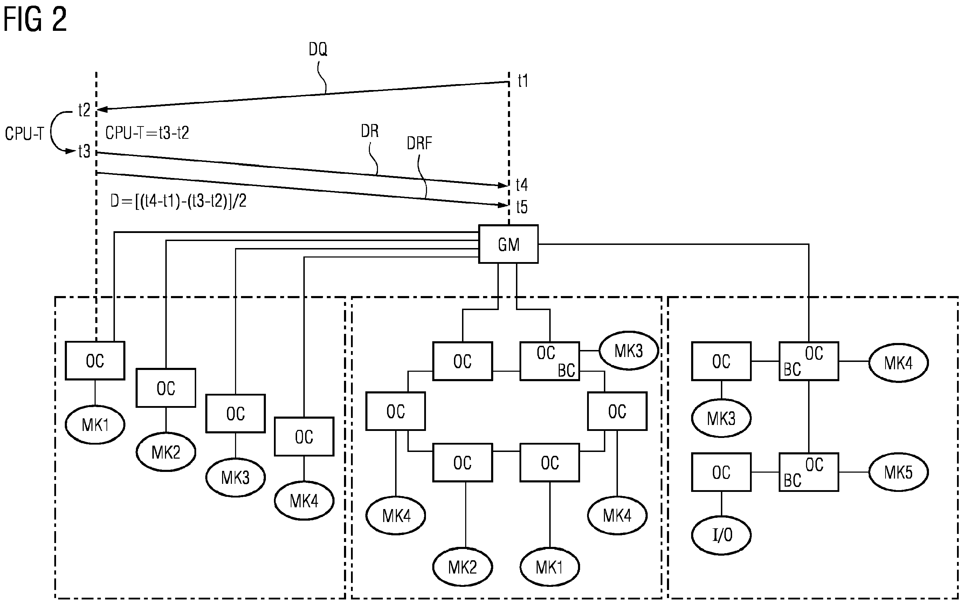

Der Master kann auch die CPU-Time berechnen. Die CPU-Time (siehe Fig. 2 - Fig. 4) ist die Zeit, die der Slave benötigt, um nach Erhalt der Delay Request DQ Nachricht die Delay Response DR Nachricht zu übertragen. Die CPU-Time ist erfindungsgemäß wichtig, da hiermit bestimmt werden kann, wie lange die CPU benötigt, um die PTP-Nachrichten zu bearbeiten.

$$CPU\text{-}Time = t3-t2 = t4-t1-2*D$$

In einem anderen Fall kann auch wie in Fig. 1b dargestellt vorgegangen werden. Es ist eine Delay-Messung zwischen zwei Kommunikationspartnern im one-step Mode dargestellt. Die Nachricht Delay Response DF (oder die Delay Response Follow-up DRF im Falle des two-step Modes) kann die Differenz des dritten Zeitpunktes t3 und des zweiten Zeitpunktes t2 (daher: (t3 - t2)) enthalten. Der Grandmaster GM kann so den Delay D bestimmen. Die weiteren Details in Fig. 1b sind identisch zu Fig. 1a dargestellt.

Weiterhin kann mit allen oben genannten Methoden die Zeit bestimmt werden, die die CPU der Ordinary Clock OC benötigt hat, um die Delay Request DQ Anfrage zu bearbeiten (Delay D = (t2 - t1 + t4 - t3) /2). In anderen Worten gesagt, kann der Master M berechnen, wie lange der Slave S benötigt hat, um die PTP Nachricht zu bearbeiten (CPU-Time).

Die Auslastung einer Kommunikationseinheit (zum Beispiel der Slave S Einheit in Fig. 1a oder Fig. 1b) kann somit wie beschrieben über die Änderung der gesamten Paketlaufzeit (Delay D) ermittelt werden. Jedoch besteht auch die Möglichkeit, die Auslastung der ersten Kommunikationseinheit über die Bearbeitungszeit (oder auch als Residence Time bezeichenbar) zu ermitteln. Die Bearbeitungszeit berechnet sich aus der Differenz des dritten Zeitpunkts t3 und des zweiten Zeitpunkts t2 (t3-t2). Wie zuvor beschrieben, kann die Bearbeitungszeit entweder direkt vom Slave S übertragen werden, oder durch die Werte t3 und t2 berechnet werden.

Es besteht auch die Möglichkeit, dass der Master die Zeitinformation über PTP Nachrichten an ein oder mehrere Slaves kommuniziert. Daher würden die Slaves die Zeitwerte t1, t2, t3 und t4 erhalten, wodurch die Slaves die Bearbeitungszeit (t3-t2) berechnen können. (In IEEE 1588 v2.1 ist dieses Kommunikationsschema unter Figure 41 vorgestellt).

Außerdem existieren nach PTP-Standard (IEEE 1588) weitere Methoden, um den Delay und die CPU-Time zu berechnen. Für weitere Implementierungsmöglichkeiten soll auf den Standard verwiesen werden.

## ZUSAMMENFASSUNG DER ERFINDUNG

Die Aufgabe der Erfindung besteht darin, eine Lösung zur Erkennung eines Angriffs auf ein industrielles Automatisierungssystem anzugeben.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, ein Verfahren zur Erkennung einer Anomalie und eines Angriffs auf ein industrielles Automatisierungssystem durch die Analyse der Laufzeit von Kommunikationspaketen in Kommunikationsprotokollen anzugeben.

Die Erfindung beansprucht ein Verfahren zur Erkennung einer Anomalie und eines Angriffs auf eine über ein vorgegebenes Kommunikationsprotokoll synchronisierte erste Kommunikationseinheit eines industriellen Netzwerks mit den Schritten:

- Übertragen von mindestens einem ersten Paket (auch als erstes Datenpaket oder Kommunikationspaket bezeichenbar, z.B. eine Delay Request DQ) von einer zweiten Kommunikationseinheit (z.B. ein Master) zu der ersten Kommunikationseinheit (z.B. ein Slave),
- Übertragen von mindestens einem zweiten Paket (auch als zweites Datenpaket oder Kommunikationspaket bezeichenbar, z.B. eine Response DR) von der ersten Kommunikationseinheit an die zweite Kommunikationseinheit als Antwort auf das erste Paket,
- Ermittlung einer Laufzeit, wobei die Laufzeit die Differenz des Ankunftszeitpunkts des zweiten Pakets in der zweiten Kommunikationseinheit und des Absendezeitpunkts des ersten Pakets von der zweiten Kommunikationseinheit ist, und/oder wobei die Laufzeit die Differenz des Absendezeitpunkts des zweiten Pakets von der ersten Kommunikationseinheit und des Ankunftszeitpunkts des ersten Pakets bei der ersten Kommunikationseinheit ist, und/oder wobei die Laufzeit die Differenz des Absendezeitpunkts des zweiten Pakets von der ersten Kommunikationseinheit und des Absendezeitpunkts eines weiteren zweiten Pakets bei der ersten Kommunikationseinheit ist, und/ oder wobei die Laufzeit die Differenz des Ankunftszeitpunkts des zweiten Pakets in der zweiten Kommunikationseinheit und des Ankunftszeitpunkts eines weiteren zweiten Pakets in der zweiten Kommunikationseinheit ist,
- Ermittlung einer Abweichung der Laufzeit von einem vorgegebenen Laufzeitkorridor,
- Ausgabe eines Warnsignals als Hinweis auf eine Anomalie und eines Angriffs, wenn die Laufzeit außerhalb des Laufzeitkorridors liegt.

Dabei können beliebig viele erste Pakete und beliebig viele zweite Pakete versandt werden. Auf das Absenden eines zweiten Paketes kann auch wieder ein erstes Paket versandt werden.

Die Erfindung nutzt spezifisch den Zustand eines Kommunikationsprotokolls, z.B. eines Zeitsynchronisierungsprotokolls (z.B. PTP-Protokolls), um sowohl den Zustand einer Kommunikationseinheit (erste Kommunikationseinheit) zu überwachen als auch das Zusammenspiel dieser Kommunikationseinheit (erste Kommunikationseinheit) mit anderen, ebenfalls über z.B. PTP synchronisierten Kommunikationseinheiten (zweite Kommunikationseinheit). Dabei kann der Zustand basierend auf einem konfigurierten Wertebereich überprüft werden, oder auch auf einem dynamisch angelernten. Im Betrieb können damit Sprünge in der Synchronisation (z.B. die Laufzeit, d.h. t4- t1 und/ oder t3-t2 und/ oder t3b - t3 und/ oder t4b - t4 nach einer der Fig. 1a bis Fig. 4) erkannt werden, die auf eine Manipulation der Software/Firmware oder auch der Verkabelung hinweisen.

Das Kommunikationsprotokoll, z.B. als PTP-Protokoll ausgebildet, misst die Zeit, die ein Paket (erstes oder zweites Paket) benötigt, um von einer Kommunikationseinheit zu einer anderen zu gelangen. Erfindungsgemäß wird aus der Paketlaufzeit (z.B. über die Werte t1, t2, t3, t3b und t4, t4b, oder nur t2 und t3 oder die Residence Time RT (gleich der Laufzeit oder der Paket-Bearbeitungszeit) im correctionField) abgeleitet, wie lange die CPU des Gerätes (auch als Device-Under-Tests (DUT) bezeichenbar) einer Kommunikationseinheit benötigt hat, um auf eine bzw. mehrere (PTP-)Nachrichten zu antworten (CPU-Time). Ist die CPU ausgelastet, so wird die Paket-Bearbeitungszeit hoch sein. Ist die CPU geringer ausgelastet, so wird die CPU-Time geringer sein. Weicht die CPU-Time (bei einer oder mehreren Messungen) von dem üblichen Wert des Gerätes / des DUTs (bei gleichbleibendem Anwendungsszenario) ab, so kann auf eine Anomalie geschlossen und dies daher als ein Indikator (Feature) für einen Angriff gesehen werden. Dieses Feature kann in ein Intrusion Detection System (IDS) eingebracht werden, um mit statistischen Methoden oder Algorithmen des maschinellen Lernens Angriffe auf das ICS eines industriellen Automatisierungs- und Steuerungssysteme (Industrial Automation and Control Systems IACS, auch als ICS bezeichnet) zu überwachen, zu steuern und zu ermöglichen eine Manipulation zu erkennen. Beispielsweise könnte ein IDS die Aktivität der CPU bei gleichbleibendem Anwendungsszenario vergleichen. Weicht die CPU-Time erheblich von dem normalen Wert ab, so kann das als Anomalie gewertet werden. Oder aber man könnte andere Features (z.B. die Systemaufrufe von Betriebssystemfunktionen des ICS) mit der gemessenen CPU-Time/Laufzeit vergleichen, um Anomalien zu erkennen. Dabei werden hier verschiedene Features (CPU-Time, Systemaufrufe, etc.) zeitlich miteinander in Verbindung gebracht und daraus abgeleitet, ob es sich um eine Anomalie handelt oder nicht. Im Betrieb können damit Sprünge in der Synchronisation erkannt werden, die auf eine Manipulation der Software/Firmware oder auch der Verkabelung hinweisen. Dies ist insbesondere bei Echtzeit-fähigen Steuergeräten anwendbar, die ein deterministisches Zeitverhalten realisieren. Anhand eines geänderten Zeitverhaltens kann erkannt werden, dass das Steuergerät nicht integer ist.

In einer weiteren Ausführung erfolgt die Ausgabe des Warnsignals, wenn die Laufzeit außerhalb des Laufzeitkorridors liegt und zumindest ein weiteres Kriterium erfüllt ist. Das weitere Kriterium kann bspw. Systemaufrufe, Netzwerkauslastung, ausgeführte Programme, Datenzugriffe, etc. beinhalten.

In einer weiteren Ausführung werden die Laufzeit und das weitere Kriterium signatur- und/ oder anomaliebasiert und/ oder durch statistische Berechnungen ausgewertet. Die Auswertung der Laufzeit und des Weiteren Kriteriums können kombiniert in einem IDS stattfinden.

In einer weiteren Ausführung werden die Vergleichswerte in Abhängigkeit von verschiedenen CPU-Auslastungen vorliegen und/oder aus einem Prozessmodell und/ oder durch maschinelles Lernen des normalen Verhaltens des Netzwerks abgeleitet.

Es wird davon ausgegangen, dass insbesondere bei konfigurierten (Engineered Systems) Systemen Vergleichswerte für die CPU-Last existieren oder aus dem Prozessmodell abgeleitet/errechnet werden können. Mit der aktuellen CPU-Time kann rückgeschlossen werden, wie stark die CPU ausgelastet ist.

In einer Variante kann die Auswertung der CPU-Time mit einer Prozesssteuerung gekoppelt sein, über die das jeweilig erwartete Zeitverhalten anhand des aktuellen Prozessschrittes als Referenzwert ermittelt werden kann. Zur Ermittlung des erwarteten Zeitverhaltens kann insbesondere eine Simulation des Device/System-Under-Tests herangezogen werden. Die Simulation kann außerhalb der operativen Umgebung in einer speziell geschützten/weniger exponierten Umgebung ablaufen.

Im Gegensatz zu einer statistischen Erkennung von Covert Timing Channels wird hier das Zeitverhalten eines Gerätes aktiv ermittelt. Dazu wird die Zeit zur Bearbeitung einer Echtzeit-Anforderungsnachricht, z.B. einer PTP-Nachricht ermittelt und plausibilisiert. Es wird also überprüft, ob ein Gerät, das bei den Testdaten (z.B. aufgenommen von vorherigen Messungen im Normalbetrieb oder auf einem separaten Testsystem oder bei einem baugleichen Automatisierungssystem) zu erwartende Echtzeitverhalten aufweist. Bei einer Abweichung wird darauf geschlossen, dass das Gerät nicht integer ist. Dieser Ansatz hat den Vorteil, dass er einfach realisierbar ist. Die Hürde für einen erfolgreichen Angriff wird erhöht, da der Angreifer das Echtzeitverhalten des Geräts nicht beinträchtigen können soll.

In einer weiteren Ausführung ermittelt das Prozessmodell die Vergleichswerte über eine Simulation der ersten Kommunikationseinheit und/oder durch eine Referenzmessung. Dies hat den Vorteil, dass die Simulation auch außerhalb der operativen Umgebung in einer speziell geschützten/weniger exponierten Umgebung ablaufen kann. Die Referenzmessung könnte mittels einer Analyseinstanz ermittelt und analysiert werden.

In einer weiteren Ausführung wird die Ermittlung der Laufzeit und die Ermittlung der Abweichung der Laufzeit durch eine Analyseeinheit durchgeführt.

In einer weiteren Ausführung findet die Kommunikation zwischen der Analyseeinheit und der ersten Kommunikationseinheit (z.B. eines DUT oder eines Feldgerätes) manipulationsgeschützt statt.

In einer weiteren Ausführung ist die Analyseeinheit Teil der zweiten Kommunikationseinheit oder eine externe Einheit. Die externe Einheit kann sich z.B. in einer Cloud befinden. Falls sich die Analyseeinheit in einer Cloud befindet, muss die Zeitinformation im Feld von einer präzisen PTP-Einheit / Kommunikationseinheit abgegriffen werden und anschließend zu der Cloud transportiert werden. In der Cloud findet dann die Verarbeitung der Daten statt. Die Cloud kann eine Backend-Cloud, z.B. ein IIoT-Backend, oder eine Edge-Cloud sein.

In einer weiteren Ausführung wird die ermittelte Laufzeit zur Entscheidung über den Zugriff eines Gerätes des Netzwerks auf ein Remote-System oder auf ein anderes Gerät des Netzwerks verwendet. Das heißt, die CPU-Auslastungsanalyse wird z.B. dazu verwendet, um DUTs einen Zugriff zu einem Remote-System (z.B. Cloud, Edge-Cloud) oder zu einem anderen Gerät des Netzwerks zu gewähren.

In einer weiteren Ausführung ist das Kommunikationsprotokoll als Precision Time Protocol (PTP) ausgebildet.

Die Erfindung beansprucht außerdem ein industrielles Netzwerk, das ausgebildet ist, eine Anomalie und einen Angriff auf eine über ein Kommunikationsprotokoll synchronisierte erste Kommunikationseinheit zu erkennen. Das industrielle Netzwerk weist die folgenden Komponenten auf:

- mindestens eine zweite Kommunikationseinheit (z.B. ein Master),
- mindestens eine erste Kommunikationseinheit (z.B. ein Slave),
- mindestens ein erstes Paket (z.B. Delay Request DQ), das von der zweiten Kommunikationseinheit an die erste Kommunikationseinheit übertragen wird,
- mindestens ein zweites Paket (z.B. eine Delay Response DR), das von der ersten Kommunikationseinheit an die zweite Kommunikationseinheit als Antwort auf das erste Paket übertragen wird,
- eine Analyseeinheit, die ausgebildet ist, eine Laufzeit und eine Abweichung der Laufzeit von einem vorgegebenen Laufzeitkorridor zu ermitteln, wobei die Laufzeit die Differenz des Ankunftszeitpunkts des zweiten Pakets in der zweiten Kommunikationseinheit und des Absendezeitpunkts des ersten Pakets von der zweiten Kommunikationseinheit ist, und/oder wobei die Laufzeit die Differenz des Absendezeitpunkts des zweiten Pakets von der ersten Kommunikationseinheit und des Ankunftszeitpunkts des ersten Pakets bei der ersten Kommunikationseinheit ist, und/oder wobei die Laufzeit die Differenz des Absendezeitpunkts des zweiten Pakets von der ersten Kommunikationseinheit und des Absendezeitpunkts eines weiteren zweiten Pakets bei der ersten Kommunikationseinheit ist, und/ oder wobei die Laufzeit die Differenz des Ankunftszeitpunkts des zweiten Pakets in der zweiten Kommunikationseinheit und des Ankunftszeitpunkts eines weiteren zweiten Pakets in der zweiten Kommunikationseinheit ist,
- eine Ausgabeeinheit, die ausgebildet ist, ein Warnsignal als Hinweis auf eine Anomalie und eines Angriffs auszugeben, wenn die Laufzeit außerhalb des Laufzeitkorridors liegt.

Dabei können beliebig viele erste Pakete und beliebig viele zweite Pakete versandt werden. Auf das Absenden eines zweiten Paketes kann auch wieder ein erstes Paket versandt werden.

In einer weiteren Ausführung ist das industrielle Netzwerk ausgebildet, ein erfindungsgemäßes Verfahren auszuführen.

Zusammengefasst wird die Funktionalität einer Kommunikationseinheit, z.B. eines PTP-Teilnehmer erweitert, um mit Hilfe von (PTP-)Nachrichten Sprünge in der Synchronisation bzw. die CPU-Auslastung von PTP-Instanzen zu messen und somit zu versuchen, Anomalien in der CPU-Auslastung festzustellen. Diese Anomalie kann dazu verwendet werden, Angriffe zu erkennen, die auf einem System ausgeführt werden und somit die CPU belasten (z.B. Angreifer hat ein weiteres Programm installiert oder nutzt eine Schwachstelle durch Return-Oriented-Programming aus, und daher ist die CPU-Auslastung höher).

Die Erfindung beschreibt ein Verfahren und ein industrielles Netzwerk, die Manipulationen von Software oder Firmware auf einem zu überwachenden Gerät erkennen können. Hierzu wird das Zeitverhalten dieser Komponente ermittelt und mit erwarteten Werten verglichen. Da hierzu ein Standardprotokoll genutzt wird, das in der industriellen Automatisierung oftmals zur Synchronisation von Geräten oder Systemteilen genutzt wird, ist der Implementierungsaufwand gering.

Es wird mittels eines Netzwerk-basierten Seitenkanals die Integrität einer ICS-Komponente überwacht, um zu erkennen, ob die ICS-Komponente kompromittiert ist. Es kann eine einzelne oder eine Mehrzahl oder eine Vielzahl von ICS-Komponenten eines oder mehrerer ICS überwacht werden.

Darüber hinaus kann über den vorgeschlagenen Ansatz auch die physikalische Verkabelung innerhalb einer Anlage auf Veränderungen (z.B. Einfügen von Zusatzkomponenten) anhand des Zeitverhaltens überprüft werden.

Die Erfindung beschreibt eine Methode, um eine netzwerkbasierte und Angriffserkennung auf Computersystemen durchzuführen. Die Vorteile sind:

- Es muss kein IDS bzw. Antivirus System auf dem Endgerät installiert werden. Vor allem bei Industrial Automation and Control Systems IACS Komponenten, die nur eingeschränkte Ressourcen aufweisen (Speicher- und Rechenkapazität), ist der Nutzen der PTP-Kommunikation, welche oftmals in der Standardausführung enthalten ist, vorteilhaft zur Anomalie- bzw. Angriffserkennung.

- Angreifer, die ein System kompromittiert und die Kontrolle über das System erlangt haben, können auch eine auf dem Gerät installierte Gegenmaßnahme (bspw. ein Antiviren System bzw. ein Intrusion Detection System IDS) deaktivieren bzw. die Ergebnisse verfälschen. Die erfindungsgemäße Lösung kann durch Angreifer auf dem System nicht oder nur sehr schwer überwunden werden. Grund hierfür ist:

  a) PTP ist ein legitimes Zeitprotokoll und wird üblicherweise nicht zur Angriffserkennung genutzt. Daher könnte die Analyse der Zeitwerte von einer entfernten Analyseinstanz, den Angreifer überführen ohne, dass dieser weiß, dass PTP auch als Angriffserkennungsmaßnahme auf dem Computersystem betrieben wird.
  b) Weiß ein Angreifer, dass PTP zur Angriffserkennung benutzt wird, kann trotzdem nicht vorausgesagt werden, wann die nächste PTP Nachricht eintreffen wird (randomisierte PTP-Messung). Daher wird die Aktivität des Angreifers trotzdem erkannt.
  c) Weiß ein Angreifer, dass PTP zur Angriffserkennung benutzt wird, kann PTP nicht deaktiviert werden, da sonst die Analyseinstanz bzw. die zweite Kommunikationseinheit erkennt, dass das DUT bzw. die erste Kommunikationseinheit nicht integer ist.
  d) Möchte der Angreifer eine normale CPU Auslastung vortäuschen, ist das auch nur sehr schwer möglich, da ein Angreifer nie genau wissen kann, wie sich das System im ursprünglichen Zustand, also vor dem Angriff, verhalten hat.

- Damit Host-based Intrusion Detection Systeme HIDS Anomalien erkennen können, benötigen diese Systeme viele verschiedene Informationen über den Betriebszustand des Endgerätes ("Features"). Features könnten beispielsweise folgende Parameter sein: Systemaufrufe einzelner Prozesse, Netzwerkaktivität, Dateizugriffe, fehlgeschlagene Anmeldeversuche usw. Mit Hilfe dieser Erfindungsmeldung können auch Seitenkanalinformationen, wie die CPU-Auslastung bzw. die CPU-Zeit Messung, als Feature für Intrusion Detection System IDS verwendet werden.
- Auf dem Endgerät muss nichts zusätzlich installiert werden und daher stellt diese Erfindungsmeldung für ICS eine besonders effektive Methode zur Angriffserkennung dar. Es reicht die standardisierte Implementierung des PTP-Protokolls zu verwenden, ohne Änderungen am Protokoll bzw. auf den ICS selbst durchführen zu müssen (die Werte t1, t2, t3, t4 bzw. nur t3-t2 bzw. t4b-t4 bzw. t3b-t3des Standard-PTP Protokolls reichen aus, um die Analyse durchzuführen).
- Aufgrund IEEE 1588v2.1 können PTP-Nachrichten gegen Manipulation geschützt werden.

- Die sehr genaue Delay-Messung zwischen zwei PTP-Instanzen ermöglicht die genaue Bestimmung der CPU-Zeit in dem Endgerät. Außerdem kann PTP in Ethernet-Netzwerken betrieben werden und bietet daher die Möglichkeit eine Vielzahl von Geräten abzudecken.

Die Werte t1 und t4 geben Aufschluss, ob die Messung realistisch ist. Sollte die Differenz von t3 und t2 (daher: t3-t2) normal sein, aber die Differenz von t4 und t1 (daher: t4-t1) anormal groß sein, ist das ein Anzeichen dafür, dass etwas mit dem Slave oder der Leitung oder einer Transparent Clock nicht stimmt.

- Der Slave könnte die Werte t3 und t2 bzw. deren Differenz fälschen. Das heißt, dass der Slave eigentlich viel zu lange benötigt, aber einen kurzen Wert angibt. Die Differenz zwischen t4 und t1 würde das zeigen.
- Zwischen dem Slave und dem Master ist ein Angreifer, der Pakete verzögert.
- Die Transparent Clock benötigt zu lange die PTP-Nachricht weiterzuleiten.

## KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.

Es zeigen

Fig. 1a    Delay-Messung zwischen zwei Kommunikationspartnern im two-step Mode,

Fig. 1b    Delay-Messung zwischen zwei Kommunikationspartnern im one-step Mode,

Fig. 2    Delay-Messung über die CPU-Zeit,

Fig. 3    Delay-Messung über Absende- bzw. Ankunftszeitpunkten von Paketen,

Fig. 4    Delay-Messung im Ende-zu-Ende Setup mit Transparent Clock und

Fig. 5    Delay-Messung mittels zentraler Instanz.

## DETAILLIERTE BESCHREIBUNG DER ERFINDUNG

**Fig. 1a** zeigt eine Messung des Delays D zwischen zwei Kommunikationspartnern unter Nutzung des two-step Modes (separate Nachricht mit dem Korrekturwert) und ist bereits mit dem Stand der Technik zu Beginn beschrieben worden. Die Werte D und/oder t4-t1 und/oder t3-t2 können Aufschluss über eine Anomalie geben.

**Fig. 1b** zeigt eine Messung des Delays D zwischen zwei Kommunikationspartnern unter Nutzung des one-step Modes (Korrekturwert ist in der Nachricht enthalten) und ist bereits mit dem Stand der Technik zu Beginn beschrieben worden. Die Werte D und/oder t4-t1 und/oder t3-t2 können Aufschluss über eine Anomalie geben.

**Fig. 2** zeigt ein Implementierungsbeispiel der Messung des Delays D zwischen zwei Kommunikationspartnern über die Berechnung der CPU-Zeit CPU-T. Die gestrichelten Kasten sind Zellen auf der Produktionsebene und stellen logisch getrennte Netzwerksegmente dar. Ein Grandmaster GM ist der Hauptzeitgeber und die zentrale Analyseinstanz für alle Netzwerksegmente. Eine Boundary Clock BC ist der Master zu den angeschlossenen Ordinary Clocks OCs (Slaves) und erhält die Hauptzeit von dem Grandmaster GM. Außerdem sind erste Maschinenkomponenten MK1, zweite Maschinenkomponenten MK2, dritte Maschinenkomponenten MK3, vierte Maschinenkomponenten MK4 und eine fünfte Maschinenkomponente MK5 dargestellt.

**Fig. 2** zeigt außerdem eine exemplarische Messung des Delays D zwischen den zwei PTP-Instanzen Grandmaster GM und einer Ordinary Clock OC über die CPU-Time CPU-T. Die Messung verwendet die PTP-Nachrichten (oder PTP-Pakete) Delay Request DQ, Delay Response DR und Delay Response Follow-up DRF. Der Kommunikationsverlauf funktioniert wie folgt:

Der Grandmaster GM sendet zunächst die Delay Request DQ Nachricht und merkt sich den ersten Zeitpunkt t1, zu dem die Nachricht versandt wurde. Nach einer gewissen Übertragungszeit kommt die Nachricht zu dem zweiten Zeitpunkt t2 bei der Ordinary Clock OC (dem Slave/DUT) an. Hier benötigt die Ordinary Clock OC eine gewisse Zeit (CPU-Time CPU-T), um das Delay Request DQ Paket zu bearbeiten und eine Antwort als Delay Response DR Nachricht an den Grandmaster GM zu schicken. Die Delay Response DR wird zum dritten Zeitpunkt t3 gesandt und kommt zum vierten Zeitpunkt t4 bei dem Grandmaster GM an. Wobei der dritte Zeitpunkt t3 der Zeitpunkt ist, an dem die Nachricht Delay Response DR die Netzwerkkarte verlassen hat.

Im One-Step Modus, enthält die Delay Response DR Nachricht die Differenz aus dem dritten Zeitpunkt t3 und dem zweiten Zeitpunkt t2 (die Nachricht Delay Response Follow-up DRF wird nicht versandt). Im Two-Step Modus, versendet die Ordinary Clock OC zunächst die Nachricht Delay Response DR und anschließend die Nachricht Delay Response Follow-up DRF. Die Delay Response Nachricht DR enthält den Wert t2. Die Delay Response Follow-up DRF enthält in diesem Fall den Wert t3. Der GM speichert die Zeit t4, an der die Delay Response Nachricht DR an dem Netzwerkport antrifft. Der Grandmaster GM verfügt so über alle Werte t1, t2, t3, t4 und kann so die Zeit bestimmen, die die CPU der Ordinary Clock OC benötigt hat, um die Delay Request DQ Anfrage zu bearbeiten (Delay D = (t2 - t1 + t4 - t3) /2) bzw. CPU-Time CPU-T = t3-t2 bzw. t4-t1.

Außerdem besteht die Möglichkeit, die zeitliche Differenz zwischen dem Empfang der Delay Response DR zu t4 und der Delay Response Follow-up DRF Nachricht zu t5 (fünfter Zeitpunkt) zu messen und so die CPU-Auslastung zu bestimmen. Daher: t5-t4.

Endgültig kann der Grandmaster GM bestimmen, ob die Zeit, die die CPU benötigt hat, um die PTP-Anfrage zu bearbeiten, im erwarteten Zeitbereich lag oder nicht.

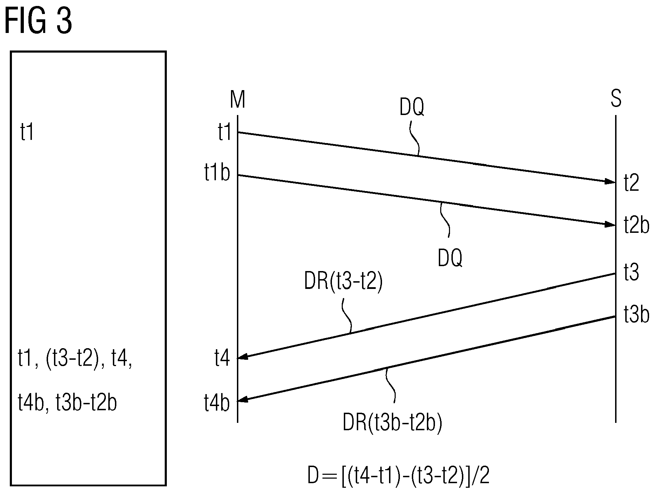

Fig. 3 zeigt eine weitere exemplarische Messung des Delays D zwischen den zwei PTP-Instanzen Master M (auch Grandmaster GM möglich) und einem Slave S (auch einer Ordinary Clock OC möglich) über die CPU-Time CPU-T. Fig. 3 ist eine Erweiterung zu Fig. 1b. In Fig. 3 werden mehrere Delay Request DQ (zu dem ersten Zeitpunkt t1 und zu dem zweiten ersten Zeitpunkt t1-b) von der Mastereinheit M abgesandt. Diese kommen zum zweiten Zeitpunkt t2 und zum zweiten Zeitpunkt t2b bei dem Slave S an. Optional als Antwort darauf werden mehrere Delay Response DR (zu dem dritte Zeitpunkt t3 und zu dem zweiten dritten Zeitpunkt t3b) vom Slave S abgesandt. Diese kommen zum vierten Zeitpunkt t4 und zum zweiten vierten Zeitpunkt t4b bei der Mastereinheit M an. Misst man den Unterschied der Zeitpunkte t2b-t2 bzw. t4b-t4, so kann man auch die Prozessorauslastung ableiten, wodurch eine Anomalieerkennung möglich ist. Werden keine DR Nachrichten zurück versandt, so kann der Slave die CPU Auslastung des Masters bestimmen (t2b-t2). Werden DR Nachrichten zurück versandt, so kann der Master die Auslastung des Slaves bestimmen (z.B.: t3-t2 und/oder t3b-t2b und/oder t3b-t3 und/oder t3b-t2 und/oder t3b-t2b und/oder t3b-t2).

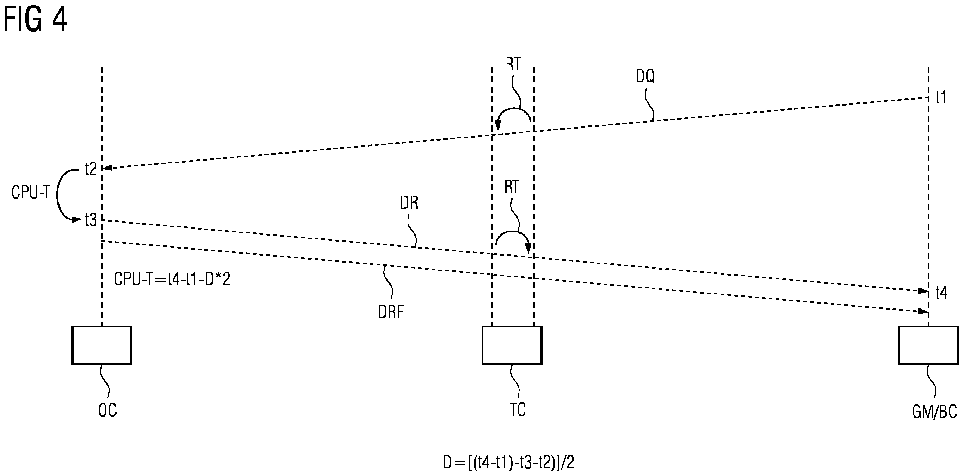

Das Implementierungsbeispiel in Fig. 4 zeigt, wie die Erfindung der Messung des Delays D und/oder der CPU-T in einem Ende-zu-Ende Setup mit einer Transparent Clock TC umgesetzt werden kann. Der Master (ein Grandmaster GM oder eine Boundary Clock BC), und gleichzeitig die zentrale Analyseinstanz, sendet zunächst eine Delay Request DQ Nachricht und merkt sich die Zeit, zu der die Nachricht versandt worden ist (erster Zeitpunkt t1). Nach einer Übertragungzeit kommt die Delay Request DQ Nachricht bei der Transparent Clock TC an. Die Transparent Clock TC benötigt eine gewisse Bearbeitungszeit, um die Delay Request DQ Nachricht von einem Netzwerksegment zu einem anderen Netzwerksegment, weiterzuleiten. PTP liefert die Eigenschaft die Paket-Bearbeitungszeit (Residence Time RT) zu Messen und diese Zeit in der PTP Delay-Nachricht zu vermerken (im Feld correctionField). Anschließend leitet die Transparent Clock TC die PTP-Nachricht, unter Anmerkung der Bearbeitungszeit, an die Ordinary Clock OC weiter. Die Ordinary Clock OC notiert den zweiten Zeitpunkt t2 an der die Delay Request DQ Nachricht bei der Ordinary Clock OC angekommen ist.

Anschließend sendet die Ordinary Clock OC zu dem dritten Zeitpunkt t3 eine Delay Response DR Nachricht, wobei der dritte Zeitpunkt t3 die Zeit ist, an der die Nachricht die Netzwerkkarte der Ordinary Clock OC verlässt. Nach einer Übertragungszeit kommt die Delay Response DR Nachricht der Ordinary Clock OC bei der Transparent Clock TC an. Die Transparent Clock TC benötigt eine gewisse Bearbeitungszeit, um die Delay Response DR Nachricht von einem Netzwerksegment zu einem anderen Netzwerksegment, weiterzuleiten. Anschließend leitet die Transparent Clock TC die Delay Response DR Nachricht an den Master (Grandmaster GM oder die Boundary Clock BC) weiter. Im One-Step Modus, enthält die Delay Response DR Nachricht die Differenz aus dem dritten Zeitpunkt t3 und dem zweiten Zeitpunkt t2 (die Nachricht Delay Response Follow-up DRF wird nicht versandt). Im Two-Step Modus, versendet die Ordinary Clock OC zunächst die Nachricht Delay Response DR und anschließend die Nachricht Delay Response Follow-up DRF. Die Nachricht Delay Response Follow-up DRF enthält auch die Differenz zwischen dem dritten Zeitpunkt t3 und dem zweiten Zeitpunkt t2, wobei der dritte Zeitpunkt t3 der Zeitpunkt ist, an der die Delay Response DR Nachricht die Netzwerkkarte verlassen hat. Optional kann die Nachricht DR den Wert t2 beinhalten und die Nachricht DRF den Wert t3. Nun kann der Master (Grandmaster GM oder die Boundary Clock BC) die CPU-Time mit der Formel Delay D = (t2 - t1 + t4 - t3) /2) und/oder mit CPU-Time CPU-T = t3-t2 berechnen.

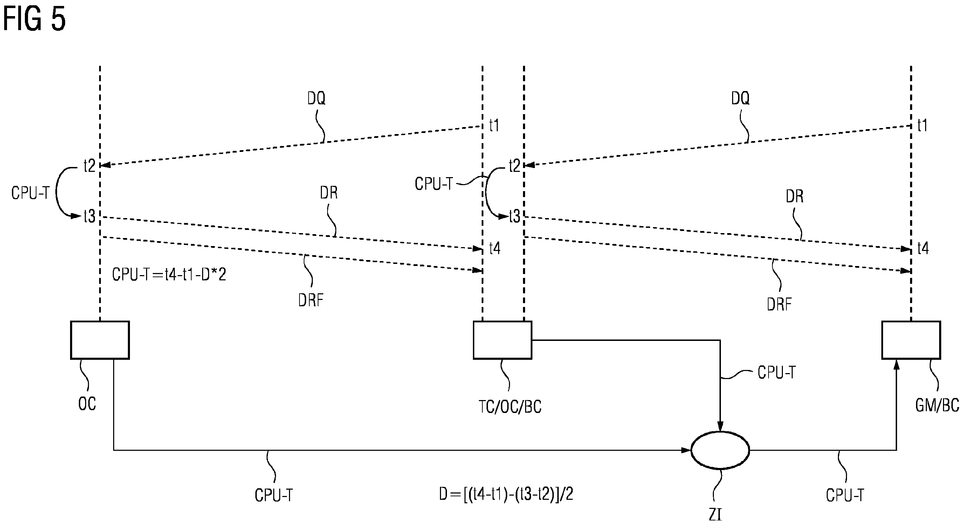

Fig. 5 zeigt ein Implementierungsbeispiel der Messung eines Delays mittels zentraler Instanz ZI. Können keine Delay-Nachrichten von einem Master (Grandmaster GM oder Boundary Clock BC) über die Transparent Clock TC zur Ordinary Clock OC (Slave) versendet werden, so kann die Messung auch von anderen PTP-Instanzen durchgeführt werden. Diese Instanzen melden die gemessenen CPU-Times CPU-T einer zentralen Instanz ZI zur Analyse. Der Netzwerkadministrator kann so die Parameter weiter analysieren, oder die Messwerte werden direkt von einem Intrusion Detection System (IDS) als Features für eine Angriffserkennung verwendet. Fig. 5 zeigt wie Messergebnisse an eine zentrale Instanz versandt werden und von einer weiteren Instanz geprüft werden.

Für den Fall, dass ein Angreifer seine Aktivität verschleiern und sich für den Zeitraum der Messung in einen Ruhezustand versetzen möchte, können erfindungsgemäß alle PTP-Nachrichten in Bezug auf den Sendezeitpunkt randomisiert versendet werden. Somit kann der Angreifer nie vorhersehen, wann die nächste Messung stattfinden wird und daher besteht für den Angreifer keine Chance sich rechtzeitig in den Ruhezustand zu versetzen.

Bei PTP wird derzeit ein Integritätsschutz und eine Nachrichten-Authentifizierung für PTP Pakete spezifiziert (IEEE1588 v2.1). Hierbei wird die Integrität der PTP Nachrichten mit Hilfe eines Integrity Check Values (ICV) gesichert. Für bestimmte Anwendungsszenarien, insbesondere im Bereich der CPU Time Messung, ist eine Absicherung der Kommunikation sinnvoll.

In einer Variante der Erfindung werden daher die für PTP definierten Sicherheitsmechanismen genutzt, um den Nachrichtenaustausch zwischen PTP-Instanzen Grandmaster GM, Boundary Clock BC, Transparent Clock TC und Ordinary Clocks OC/ Slaves abzusichern. Die definierte Sicherheit betrifft dabei die Integritätssicherung und Nachrichten-Authentifizierung.

Um die Integritätssicherung und Nachrichten-Authentifizierung durchführen zu können, müssen PTP-Instanzen über ein gemeinsames kryptographisches Geheimnis verfügen. Dieses kryptographische Material kann entweder manuell verteilt sein oder aber dynamisch zu Beginn einer Kommunikationssitzung ausgehandelt werden. Beispielsweise könnte die Security Association (enthält kryptographische Schlüssel und Schlüsselparameter) und die Security Policy (definiert die Sicherheitseinstellungen für die jeweiligen PTP Nachrichten) über einen Key Distribution Server verteilt werden. Diese Sicherheitsparameter könnten wie folgt definiert werden:

```
<!--=============== Security Association ===============-->
<sa spp="SA_1" type="SYMMETRIC">

<key>0x1945b6aa0e513d1e31cd06284aabef58f995f4be59ed9f300ae560
b694b26236</key>
    <keyid>42</keyid>
    <icvalgo>HMAC_SHA256</icvalgo>
    <icvlen>16</icvlen>
</sa>

<!--=============== Security Policy ===================-->
<!--=============== PTP Message Type ===================-->
<rule id="RULE_1">
    <sourceportid>90e2ba.fffe.368854-1</sourceportid>
    <selfportid>ANY</selfportid>
    <domain>0</domain>
    <majorsdoid>0x0</majorsdoid>
    <minorsdoid>0x00</minorsdoid>
    <msgtype>SYNC</msgtype>
    <secure>ENABLED</secure>
    <authentication>DELAYED_UNAUTH</authentication>
    <spp>SA_2</spp>
</rule>
```

In einer alternativen Variante wird die Messung der CPU-Time CPU-T des zu überprüfenden Gerätes nicht durch einen Master (Grandmaster GM oder Boundary Clock BC) durchgeführt, sondern die CPU-Time wird von einer Ordinary Clock OC ermittelt, die das zu testende Gerät als Transparent Clock TC für Peer-to-Peer Delay Messungen nutzt. Hierzu werden multicast Sync Nachrichten genutzt, die von dem Master (Grandmaster GM oder Boundary Clock BC) gesendet werden. Läuft auf der zu überwachenden Komponente eine Transparent Clock TC, so wird ausgenutzt, dass eine Transparent Clock TC die Durchlaufzeit durch die Komponente ermittelt und im correctionField der Delay Response DR Nachricht (One-Step Modus) oder der Delay Response Follow-up DRF Nachricht (Two-Step Modus) hinterlegt (z.B. siehe: Wert Residence Time RT in Figure 3). Damit arbeitet die Ordinary Clock OC als Probe für die zu überwachende Komponente und kann permanent oder für eine bestimmte Überwachungszeit topologisch "hinter" der Transparent Clock TC (dem zu überwachenden Gerät) platziert werden.

Da die Residence Time RT bis in den sub-nano Sekundenbereich auflösen kann (wenn PTP in der Hardware realisiert wird und das Zeitstempeln direkt auf der Netzwerkkarte erfolgt), können sehr präzise Rückschlüsse auf die Auslastung des überwachten Systems basierend auf der Residence Time RT gezogen werden. Hierzu wird die ermittelte Durchlaufzeit durch die zu überwachende Komponente mit entsprechenden Sollwerten bzw. einen Sollwertebereich verglichen.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

Damit die Erfindung funktioniert, ist es ausreichend, wenn mindestens einer (oder mehrere) der folgenden Werte zur Verfügung steht:

- der Delay D
- der Master verfügt über die Messungen t1, t2, t3, t4
- die Differenz aus t4-t1
- die Differenz aus t3-t2
- die Differenz aus t5-t4 (siehe Fig. 2)
- die Differenz aus t3b - t3 (siehe Fig. 3)
- die Differenz aus t4b - t4 (siehe Fig. 3)
- die Residence Time

Das PTP Protokoll kann verwendet werden, um all diese Werte gemeinsam oder einzeln zu bestimmen. Ein Fachmann kann auch weitere, PTP ähnliche Zeitsynchronisations-Protokolle verwenden, um diese Werte zu bestimmen.

In einer weiteren Ausführungsform besteht die Möglichkeit, dass der Master (zweite Einheit) PTP Nachrichten kontinuierlich an die Slaves (erste Einheit) überträgt. Unter anderem sind beispielsweise mögliche Nachrichten SYNC und FOLLOW_UP des PTP Standards. Diese Nachrichten können entweder zielgerichtet an einen Slave oder per Broadcast an mehrere Slaves übertragen werden. Hier kann der Slave durch die Differenz der Ankunftszeiten (Ankunftszeit FOLLOW_UP - Ankunftszeit SYNC) herausfinden, ob die CPU des Masters anormal bzw. anormal ausgelastet ist oder nicht (siehe Fig.3: Differenz t2b - t2, zeigt die Auslastung der CPU des Masters an den Slave). Weiterhin besteht die Möglichkeit diese Methode mit den zuvor beschriebenen Methoden zu kombinieren (z.B CPU-Time, DQ, DR, DRF, etc.).

Anmerkung: Die Bezeichnung der PTP Pakete (z.B. DQ, DR, DRF, SYNQ, FOLLOW_UP) sind nicht bindend und können nach dem PTP Standard, je nach Anwendungsszenario, anders bezeichnet werden. Wichtig ist die erfindungsgemäße Verwendung der allgemeinen PTP Pakete und die Verarbeitung der Zeitinformationen. Die Paketnamen sind daher variabel.

**Bezugszeichenliste**

| | |
|---|---|
| BC | Boundary Clock |
| CPU-T | CPU-Time |
| D | Delay |
| DR | Delay Response |
| DRF | Delay Response Follow-up |
| DQ | Delay Request |
| GM | Grandmaster |
| MK1 | erste Maschinenkomponente |
| MK2 | zweite Maschinenkomponente |
| MK3 | dritte Maschinenkomponente |
| MK4 | vierte Maschinenkomponente |
| MK5 | fünfte Maschinenkomponente |
| RT | Residence Time (dt. Paket-Bearbeitungszeit) |
| t1 | erster Zeitpunkt |
| t1b | zweiter erster Zeitpunkt |
| t2 | zweiter Zeitpunkt |
| t2b | zweiter Zeitpunkt |
| t3 | dritter Zeitpunkt |
| t3b | zweiter dritter Zeitpunkt |
| t4 | vierter Zeitpunkt |
| t4b | zweiter vierter Zeitpunkt |
| t5 | fünfter Zeitpunkt |
| TC | Transparent Clock |
| OC | Ordinary Clock |
| ZI | Zentrale Instanz |

**Patentansprüche**

1. Verfahren zur Erkennung einer Anomalie und eines Angriffs auf eine über ein vorgegebenes Kommunikationsprotokoll synchronisierte erste Kommunikationseinheit (S) eines industriellen Netzwerks mit den Schritten:

   - Übertragen von mindestens einem ersten Paket (DQ) von einer zweiten Kommunikationseinheit (M) zu der ersten Kommunikationseinheit (S),
   - Übertragen von mindestens einem zweiten Paket (DR) von der ersten Kommunikationseinheit (S) an die zweite Kommunikationseinheit (M) als Antwort auf das erste Paket (DQ),
   - Ermittlung einer Laufzeit (D), wobei die Laufzeit (D) die Differenz des Ankunftszeitpunkts (t4) des zweiten Pakets (DR) in der zweiten Kommunikationseinheit (M) und des Absendezeitpunkts (t1) des ersten Pakets (DQ) von der zweiten Kommunikationseinheit (M) ist, und/oder wobei die Laufzeit (D) die Differenz des Absendezeitpunkts (t3) des zweiten Pakets (DR) von der ersten Kommunikationseinheit (S) und des Ankunftszeitpunkts (t2) des ersten Pakets (DQ) bei der ersten Kommunikationseinheit (S) ist, und/oder wobei die Laufzeit (D) die Differenz des Absendezeitpunkts (t3) des zweiten Pakets (DR) von der ersten Kommunikationseinheit (S) und des Absendezeitpunkts (t3b) eines weiteren zweiten Pakets (DR) bei der ersten Kommunikationseinheit (S) ist, und/ oder wobei die Laufzeit (D) die Differenz des Ankunftszeitpunkts (t4) des zweiten Pakets (DR) in der zweiten Kommunikationseinheit (M) und des Ankunftszeitpunkts (t4b) eines weiteren zweiten Pakets (DR) in der zweiten Kommunikationseinheit (M) ist,
   - Ermittlung einer Abweichung der Laufzeit (D) von einem vorgegebenen Laufzeitkorridor,
   - Ausgabe eines Warnsignals als Hinweis auf eine Anomalie und eines Angriffs, wenn die Laufzeit (D) außerhalb des Laufzeitkorridors liegt.

2. Verfahren nach Anspruch 1,
   **dadurch gekennzeichnet,**
   **dass** die Ausgabe des Warnsignals erfolgt, wenn die Laufzeit (D) außerhalb des Laufzeitkorridors liegt und zumindest ein weiteres Kriterium erfüllt ist.

3. Verfahren nach Anspruch 2,
   **dadurch gekennzeichnet,**
   **dass** die Laufzeit (D) und das weitere Kriterium signatur- und/ oder anomaliebasiert und/ oder durch statistische Berechnungen ausgewertet werden.

4. Verfahren nach einem der vorherigen Ansprüche,
   **dadurch gekennzeichnet,**
   **dass** die Vergleichswerte in Abhängigkeit von verschiedenen CPU-Auslastungen vorliegen und/oder aus einem Prozessmodell und/ oder durch maschinelles Lernen des normalen Verhaltens des Netzwerks abgeleitet werden.

5. Verfahren nach Anspruch 4,
   **dadurch gekennzeichnet,**
   **dass** das Prozessmodell die Vergleichswerte über eine Simulation der ersten Kommunikationseinheit (S) ermittelt und/oder durch eine Referenzmessung.

6. Verfahren nach einem der vorherigen Ansprüche,
   **dadurch gekennzeichnet,**
   **dass** die Ermittlung der Laufzeit (D) und die Ermittlung der Abweichung der Laufzeit (D) durch eine Analyseeinheit durchgeführt werden.

7. Verfahren nach Anspruch 6,
   **dadurch gekennzeichnet,**
   **dass** die Kommunikation zwischen der Analyseeinheit und der ersten Kommunikationseinheit (S) manipulationsgeschützt stattfindet.

8. Verfahren nach Anspruch 6 oder 7,
   **dadurch gekennzeichnet,**
   **dass** die Analyseeinheit Teil der zweiten Kommunikationseinheit (M) ist oder eine externe Einheit ist.

9. Verfahren nach einem der vorherigen Ansprüche,

**dadurch gekennzeichnet,**
**dass** die ermittelte Laufzeit (D) zur Entscheidung über den Zugriff eines Gerätes des Netzwerks auf ein Remote-System verwendet wird.

10. Verfahren nach einem der vorherigen Ansprüche,
**dadurch gekennzeichnet,**
**dass** das Kommunikationsprotokoll als Precision Time Protocol (PTP) ausgebildet ist.

11. Industrielles Netzwerk, das ausgebildet ist, eine Anomalie und einen Angriff auf eine über ein Kommunikationsprotokoll synchronisierte erste Kommunikationseinheit (S) zu erkennen,
aufweisend:

- mindestens eine zweite Kommunikationseinheit (M),
- mindestens eine erste Kommunikationseinheit (S),
- mindestens ein erstes Paket (DQ), das von der zweiten Kommunikationseinheit (M) an die erste Kommunikationseinheit (S) übertragen wird,
- mindestens ein zweites Paket (DR), das von der ersten Kommunikationseinheit (S) an die zweite Kommunikationseinheit (M) als Antwort auf das erste Paket (DQ) übertragen wird,
- eine Analyseeinheit, die ausgebildet ist, eine Laufzeit (D) und eine Abweichung der Laufzeit (D) von einem vorgegebenen Laufzeitkorridor zu ermitteln, wobei die Laufzeit (D) die Differenz des Ankunftszeitpunkts (t4) des zweiten Pakets (DR) in der zweiten Kommunikationseinheit (M) und des Absendezeitpunkts (t1) des ersten Pakets (DQ) von der zweiten Kommunikationseinheit (M) ist, und/oder wobei die Laufzeit (D) die Differenz des Absendezeitpunkts (t3) des zweiten Pakets (DR) von der ersten Kommunikationseinheit (S) und des Ankunftszeitpunkts (t2) des ersten Pakets (DQ) bei der ersten Kommunikationseinheit (S) ist, und/oder wobei die Laufzeit (D) die Differenz des Absendezeitpunkts (t3) des zweiten Pakets (DR) von der ersten Kommunikationseinheit (S) und des Absendezeitpunkts (t3b) eines weiteren zweiten Pakets (DR) bei der ersten Kommunikationseinheit (S) ist, und/ oder wobei die Laufzeit (D) die Differenz des Ankunftszeitpunkts (t4) des zweiten Pakets (DR) in der zweiten Kommunikationseinheit (M) und des Ankunftszeitpunkts (t4b) eines weiteren zweiten Pakets (DR) in der zweiten Kommunikationseinheit (M) ist,
- eine Ausgabeeinheit, die ausgebildet ist, ein Warnsignal als Hinweis auf eine Anomalie und eines Angriffs auszugeben, wenn die Laufzeit (D) außerhalb des Laufzeitkorridors liegt.

12. Industrielles Netzwerk nach Anspruch 11, das ausgebildet ist ein Verfahren nach einem der Ansprüche 1 bis 10 auszuführen.

## FIG 1a

| M | | S |
|---|---|---|
| t1 | DQ | t2 |
| | DR(t2) | t3 |
| t4 | | |
| | DRF(t3) | |

t1

t1, t2, t4

t1, t2, t3, t4

## FIG 1b

t1

t1, (t3-t2), t4

M — DQ — S

t1 → t2

DR(t3-t2) → t3

t4

$$D = [(t4-t1)-(t3-t2)]/2$$

# FIG 2

EP 3 734 930 A1

$$CPU\text{-}T = t3 - t2$$

$$D = [(t4-t1)-(t3-t2)]/2$$

# FIG 3

t1

t1, (t3-t2), t4,

t4b, t3b-t2b

M        DQ        S

t1

t1b      t2

t2b

DQ

t3

DR(t3-t2)

t3b

t4

DR(t3b-t2b)

t4b

$$D = [(t4-t1)-(t3-t2)]/2$$

# FIG 4

RT

DQ

t1

t2

CPU-T

RT

DR

t3

CPU-T=t4-t1-D*2

DRF

t4

OC

TC

GM/BC

$$D = [(t4-t1)-t3-t2)]/2$$

EP 3 734 930 A1

# FIG 5

DQ

DQ

t1

t1

t2

t2

CPU-T

CPU-T

DR

DR

t3

t3

t4

t4

CPU-T=t4-t1-D*2

DRF

DRF

OC

TC/OC/BC

CPU-T

GM/BC

CPU-T

$D = [(t4-t1)-(t3-t2)]/2$

CPU-T

ZI

Europäisches
Patentamt

European
Patent Office

Office européen
des brevets

# EUROPÄISCHER RECHERCHENBERICHT

Nummer der Anmeldung

EP 19 17 1861

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KARLSSON JONNY ET AL: "A packet traversal time per hop based adaptive wormhole detection algorithm for MANETs", 2016 24TH INTERNATIONAL CONFERENCE ON SOFTWARE, TELECOMMUNICATIONS AND COMPUTER NETWORKS (SOFTCOM), UNIVERSITY OF SPLIT, FESB, 22. September 2016 (2016-09-22), Seiten 1-7, XP033017660, DOI: 10.1109/SOFTCOM.2016.7772109 [gefunden am 2016-12-05] * Zusammenfassung; Abbildungen 1, 2 * * Abschnitt I * * Abschnitte II-A, II-B * | 1-12 | INV. H04L29/06 G06F21/55 ADD. H04L12/26 |
| X | ROBERT ANNESSI ET AL: "Encryption is Futile: Delay Attacks on High-Precision Clock Synchronization", ARXIV.ORG, CORNELL UNIVERSITY LIBRARY, 201 OLIN LIBRARY CORNELL UNIVERSITY ITHACA, NY 14853, 21. November 2018 (2018-11-21), XP080937367, * Zusammenfassung; Abbildungen 1-4, 9-13 * * Abschnitt II * * Abschnitt IV-A * * Abschnitt VII * * Abschnitt VIII * | 1-12 | |
| X | US 9 912 693 B1 (BALMAKHTAR MAROUANE [US] ET AL) 6. März 2018 (2018-03-06) * Zusammenfassung; Abbildungen 1, 2, 3 * * Spalte 1, Zeile 65 - Spalte 3, Zeile 39 * * Spalte 4, Zeile 40 - Spalte 5, Zeile 10 * | 1-12 | |

**RECHERCHIERTE SACHGEBIETE (IPC)**

H04L
H04J
G06F

Der vorliegende Recherchenbericht wurde für alle Patentansprüche erstellt

| Recherchenort | Abschlußdatum der Recherche | Prüfer |
|---|---|---|
| München | 15. Juli 2019 | Schossmaier, Klaus |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 17 1861

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-07-2019

| Im Recherchenbericht angeführtes Patentdokument | Datum der Veröffentlichung | Mitglied(er) der Patentfamilie | Datum der Veröffentlichung |
|---|---|---|---|
| US 9912693 B1 | 06-03-2018 | KEINE | |

Für nähere Einzelheiten zu diesem Anhang : siehe Amtsblatt des Europäischen Patentamts, Nr.12/82

EPO FORM P0461